(19) Europäisches Patentamt
European Patent Office
Office européen des brevets

(11) **EP 4 122 667 A1**

(12) **EUROPEAN PATENT APPLICATION**
published in accordance with Art. 153(4) EPC

(43) Date of publication:
**25.01.2023 Bulletin 2023/04**

(21) Application number: **21772041.6**

(22) Date of filing: **25.02.2021**

(51) International Patent Classification (IPC):
*B29B 15/12* (2006.01)     *B29K 105/10* (2006.01)
*B32B 5/28* (2006.01)     *C08J 5/04* (2006.01)
*B29C 70/10* (2006.01)

(52) Cooperative Patent Classification (CPC):
**B29B 15/12; B29C 70/10; B32B 5/28; C08J 5/04**

(86) International application number:
**PCT/JP2021/007112**

(87) International publication number:
**WO 2021/187043 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2020 JP 2020047822**

(71) Applicant: **Toray Industries, Inc.
Tokyo 103-8666 (JP)**

(72) Inventors:
• **YOSHINO, Kouki
Nagoya-shi, Aichi 455-8502 (JP)**
• **KOSHI, Masayuki
Nagoya-shi, Aichi 455-8502 (JP)**

(74) Representative: **Hoefer & Partner Patentanwälte
mbB
Pilgersheimer Straße 20
81543 München (DE)**

(54) **LAMINATED BODY AND WELDED BODY USING SAME**

(57)     In order to provide a laminate in which fiber-reinforced thermoplastic resin base materials are stacked, which can be easily welded without affecting physical properties, and a welded article thereof, a laminate is obtained by stacking five or more layers of fiber-reinforced thermoplastic resin base materials, wherein the fiber-reinforced thermoplastic resin base materials are obtained by impregnating continuous reinforcing fibers having conductivity, which are aligned in parallel, with a thermoplastic resin, and any one of the following is satisfied:
(i) among the five or more layers of fiber-reinforced thermoplastic resin base materials constituting the laminate, an orientation direction of reinforcing fibers constituting a fiber-reinforced thermoplastic resin base material S1 constituting at least one outermost layer is different from an orientation direction of reinforcing fibers constituting a fiber-reinforced thermoplastic resin base material S2 located at a second layer from the outermost layer by 10° to 90°, a fiber-fiber contact percentage is 20% or more and 100% or less in the boundary layer $I_{12}$ between the fiber-reinforced thermoplastic resin base material S1 and the fiber-reinforced thermoplastic resin base material S2, and the fiber-fiber contact percentage is less than 20% between fiber-reinforced thermoplastic resin base materials other than the boundary layer $I_{12}$; or
(ii) among the five or more layers of fiber-reinforced thermoplastic resin base materials constituting the laminate, the orientation direction of reinforcing fibers constituting a fiber-reinforced thermoplastic resin base material S1 constituting at least one outermost layer is different from the orientation direction of reinforcing fibers constituting a fiber-reinforced thermoplastic resin base material S2 located at a second layer from the outermost layer by 10° to 90°, the orientation direction of reinforcing fibers constituting the fiber-reinforced thermoplastic resin base material S2 located at the second layer from the outermost layer is different from an orientation direction of reinforcing fibers constituting a fiber-reinforced thermoplastic resin base material S3 located at a third layer from the outermost layer by 10° to 90°, the fiber-fiber contact percentage is 20% or more and 100% or less in the boundary layer $I_{12}$ between the fiber-reinforced thermoplastic resin base material S1 and the fiber-reinforced thermoplastic resin base material S2 and in the boundary layer $I_{23}$ between the fiber-reinforced thermoplastic resin base material S2 and the fiber-reinforced thermoplastic resin base material S3, and the fiber-fiber contact percentage is less than 20% between fiber-reinforced thermoplastic resin base materials other than the boundary layer $I_{12}$ and the boundary layer $I_{23}$.

Fig. 1

**Description**

TECHNICAL FIELD

The present invention relates to a laminate made of a fiber-reinforced thermoplastic resin, and further to a welded article using a laminate excellent in heating characteristics during induction heating.

BACKGROUND ART

A plastic-based composite material made of reinforcing fibers and a matrix resin is lighter than a metal-based composite material or a ceramic-based composite material, has a wide variety of materials, and has made remarkable progress. As molded articles and the like, they are used for members of electric and electronic devices, members of precision machines, building materials, members for automobiles, home appliances, household products, sporting goods, medical devices, aircraft, members for space devices, and the like.

As the reinforcing fibers of the plastic-based composite material, aramid fibers of organic fibers, glass fibers and carbon fibers of inorganic fibers, or the like are mainly used from the viewpoint of high strength, high elastic modulus, and excellent heat resistance. Inorganic fibers have a small specific gravity and are lightweight; in particular, carbon fibers have characteristics such as heat resistance, corrosion resistance, and chemical resistance in addition to mechanical characteristics such as high strength and high elasticity, and therefore are used as reinforcing fibers of plastic-based composite materials.

On the other hand, as the matrix resin, a thermoplastic resin that is easy in moldability and post-processing by welding has attracted attention. In order to put a thermoplastic resin-based composite material using a thermoplastic resin as a matrix resin into practical use, a technique for welding two or more thermoplastic resin-based composite materials has been developed.

For example, Patent Document 1 discloses a method in which two fiber-reinforced resin laminates are stacked, and a magnetic field is absorbed by sandwiching a molypermalloy susceptor therebetween to uniformly heat and weld an interface between the two fiber-reinforced resin laminates.

PRIOR ART DOCUMENT

PATENT DOCUMENT

Patent Document 1: WO 2012/158293 A

SUMMARY OF THE INVENTION

PROBLEMS TO BE SOLVED BY THE INVENTION

When a polymer susceptor is used in high frequency induction heating, an interface of a laminate in which reinforcing fibers are arranged in one direction can be efficiently welded. However, since a different kind of material is used, there is concern about influence on physical properties of the laminate.

The present invention is intended to solve the problems associated with the prior art described above, and provides a laminate obtained by stacking fiber-reinforced thermoplastic resin base materials, which can be easily welded without affecting the physical properties, and a welded article thereof.

SOLUTIONS TO THE PROBLEMS

The present invention mainly has the following constitutions, in order to solve the above-mentioned problems.

[1] A laminate in which five or more layers of fiber-reinforced thermoplastic resin base materials are stacked, wherein the fiber-reinforced thermoplastic resin base materials are obtained by impregnating continuous reinforcing fibers having conductivity, which are aligned in parallel, with a thermoplastic resin, and any one of the following is satisfied.

(i) Among the five or more layers of fiber-reinforced thermoplastic resin base materials constituting the laminate, an orientation direction of reinforcing fibers constituting a fiber-reinforced thermoplastic resin base material S1 constituting at least one outermost layer is different from an orientation direction of reinforcing fibers constituting a fiber-reinforced thermoplastic resin base material S2 located at a second layer from the outermost layer by 10° to 90°, a fiber-fiber contact percentage is 20% or more and 100% or less in a boundary layer $I_{12}$ between

the fiber-reinforced thermoplastic resin base material S1 and the fiber-reinforced thermoplastic resin base material S2, and the fiber-fiber contact percentage is less than 20% between fiber-reinforced thermoplastic resin base materials other than the boundary layer $I_{12}$.

(ii) Among the five or more layers of fiber-reinforced thermoplastic resin base materials constituting the laminate, the orientation direction of reinforcing fibers constituting a fiber-reinforced thermoplastic resin base material S1 constituting at least one outermost layer is different from the orientation direction of reinforcing fibers constituting a fiber-reinforced thermoplastic resin base material S2 located at a second layer from the outermost layer by 10° to 90°, the orientation direction of reinforcing fibers constituting the fiber-reinforced thermoplastic resin base material S2 located at the second layer from the outermost layer is different from an orientation direction of reinforcing fibers constituting a fiber-reinforced thermoplastic resin base material S3 located at a third layer from the outermost layer by 10° to 90°, the fiber-fiber contact percentage is 20% or more and 100% or less in the boundary layer $I_{12}$ between the fiber-reinforced thermoplastic resin base material S1 and the fiber-reinforced thermoplastic resin base material S2 and in a boundary layer $I_{23}$ between the fiber-reinforced thermoplastic resin base material S2 and the fiber-reinforced thermoplastic resin base material S3, and the fiber-fiber contact percentage is less than 20% between fiber-reinforced thermoplastic resin base materials other

than the boundary layer $I_{12}$ and the boundary layer $I_{23}$.

[2] The laminate according to [1], wherein a thickness of the fiber-reinforced thermoplastic resin base material is 0.05 mm to 0.5 mm.

[3] The laminate according to [1] or [2], wherein a fiber volume content of the fiber-reinforced thermoplastic resin base material is 40% or more and 70% or less.

[4] The laminate according to any one of [1] to [3], including a resin layer having a thickness of 1 to 50 $\mu$m on at least one surface of the laminate.

[5] A welded article obtained by stacking and welding two or more of the laminate according to any one of [1] to [4] or stacking and welding the laminate according to any one of [1] to [4] and a material different from the laminate.

[6] The welded article according to [5], wherein the welding is performed by induction heating.

EFFECTS OF THE INVENTION

According to the present invention, there is provided a laminate obtained by stacking fiber-reinforced thermoplastic resin base materials, which is excellent in induction heating characteristics and can be easily welded without affecting physical properties. In addition, it is possible to obtain a welded article provided by stacking and welding a plurality of the laminates or by stacking and welding the laminate with other materials.

BRIEF DESCRIPTION OF THE DRAWING

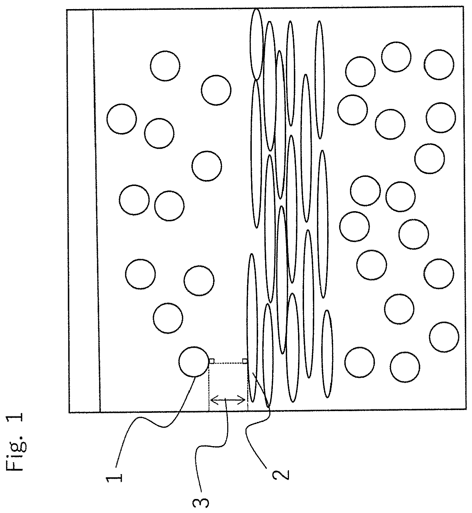

Fig. 1 is a schematic cross-sectional view of a laminate according to the present invention.

EMBODIMENTS OF THE INVENTION

Hereinafter, the present invention will be described in more detail with reference to examples.

The laminate according to the present invention is a laminate in which five or more layers of fiber-reinforced thermoplastic resin base materials are stacked, wherein the fiber-reinforced thermoplastic resin base materials are obtained by impregnating continuous reinforcing fibers having conductivity, which are aligned in parallel, with a thermoplastic resin, and any one of the following is satisfied.

(i) Among the five or more layers of fiber-reinforced thermoplastic resin base materials constituting the laminate, an orientation direction of reinforcing fibers constituting a fiber-reinforced thermoplastic resin base material S1 constituting at least one outermost layer is different from an orientation direction of reinforcing fibers constituting a fiber-reinforced thermoplastic resin base material S2 located at a second layer from the outermost layer by 10° to 90°, a fiber-fiber contact percentage is 20% or more and 100% or less in a boundary layer $I_{12}$ between the fiber-reinforced thermoplastic resin base material S1 and the fiber-reinforced thermoplastic resin base material S2, and the fiber-fiber contact percentage is less than 20% between fiber-reinforced thermoplastic resin base materials other than the boundary layer $I_{12}$.

(ii) Among the five or more layers of fiber-reinforced thermoplastic resin base materials constituting the laminate, the orientation direction of reinforcing fibers constituting a fiber-reinforced thermoplastic resin base material S1 constituting at least one outermost layer is different from an orientation direction of reinforcing fibers constituting a fiber-reinforced thermoplastic resin base material S2 located at a second layer from the outermost layer by 10° to 90°, the orientation direction of reinforcing fibers constituting the fiber-reinforced thermoplastic resin base material S2 located at the second layer from the outermost layer is different from an orientation direction of reinforcing fibers constituting a fiber-reinforced thermoplastic resin base material S3 located at a third layer from the outermost layer by 10° to 90°, and the fiber-fiber contact percentage is 20% or more and 100% or less in the boundary layer $I_{12}$ between the fiber-reinforced thermoplastic resin base material S1 and the fiber-reinforced thermoplastic resin base material S2 and in a boundary layer $I_{23}$ between the fiber-reinforced thermoplastic resin base material S2 and the fiber-reinforced thermoplastic resin base material S3, and the fiber-fiber contact percentage is less than 20% between fiber-reinforced thermoplastic resins other than the boundary layer $I_{23}$.

The fiber-reinforced thermoplastic resin base material used in the present invention is obtained by impregnating continuous reinforcing fibers aligned in parallel with a thermoplastic resin. In the present invention, the continuous reinforcing fiber means a continuous reinforcing fiber in the fiber-reinforced thermoplastic resin base material. As the form and arrangement of the reinforcing fibers in the present invention, the reinforcing fibers are arranged in one direction.

As the reinforcing fiber used in the present invention, a reinforcing fiber having conductivity is essential. By having conductivity, the fiber-reinforced thermoplastic resin base material can be heated by resistance heating.

Examples of the type of reinforcing fibers include carbon fibers, metal fibers, and inorganic fibers. Among them, examples of the carbon fibers include PAN-based carbon fibers made from polyacrylonitrile (PAN) fibers as a raw material, pitch-based carbon fibers made from petroleum tar and petroleum pitch as raw materials, cellulose-based carbon fibers made from viscose rayon and cellulose acetate as raw materials, vapor-grown carbon fibers made from hydrocarbons as raw materials, and graphitized fibers of these. Among these carbon fibers, PAN-based carbon fibers are preferably used because they are excellent in the balance between the strength and elastic modulus.

In addition, examples of the metal fibers include fibers made from metals such as iron, gold, silver, copper, aluminum, brass, and stainless steel. Further, examples of the inorganic fibers include fibers made from inorganic materials such as silicon carbide. Since these reinforcing fibers are often expected to function as reinforcing materials, it is desirable to exhibit high mechanical properties, and it is preferable to use carbon fibers.

The reinforcing fibers are usually composed of one reinforcing fiber bundle or a plurality of arranged reinforcing fiber bundles obtained by bundling a large number of monofilaments. The total number of filaments (number of monofilaments) of the reinforcing fiber composing one reinforcing fiber bundle or a plurality of arranged reinforcing fiber bundles is preferably 1,000 to 2,000,000. From the viewpoint of the productivity, the total number of filaments of the reinforcing fibers is more preferably 1,000 to 1,000,000, still more preferably 1,000 to 600,000, particularly preferably 1,000 to 300,000. The upper limit of the total number of filaments of the reinforcing fibers may be determined in consideration of the balance between dispersibility and handleability in addition to the viewpoint of productivity.

When the carbon fibers are used as reinforcing fibers, the monofilaments have an average diameter of 5 to 10 $\mu$m. In this case, the number of units constituting one reinforcing fiber bundle is preferably 1,000 to 50,000 monofilaments from the viewpoint of handleability.

Examples of the thermoplastic resin (matrix resin) used in the fiber-reinforced thermoplastic resin base material according to the present invention include polyesters such as a polyethylene terephthalate (PET) resin, a polybutylene terephthalate (PBT) resin, a polytrimethylene terephthalate (PTT) resin, a polyethylene naphthalate (PEN) resin, and a liquid crystal polyester resin, polyolefins such as a polyethylene (PE) resin, a polypropylene (PP) resin, and a polybutylene resin, a styrene-based resin, a polyoxymethylene (POM) resin, a polyamide (PA) resin, a polycarbonate (PC) resin, a polymethylene methacrylate (PMMA) resin, a polyvinyl chloride (PVC) resin, a polyphenylene sulfide (PPS) resin, a polyphenylene ether (PPE) resin, a modified PPE resin, a polyimide (PI) resin, a polyamideimide (PAI) resin, a polyetherimide (PEI) resin, a polysulfone (PSU) resin, a modified PSU resin, a polyethersulfone resin, a polyketone (PK) resin, a polyarylene etherketone resin (PAEK), a polyarylate (PAR) resin, a polyethernitrile (PEN) resin, a phenolic resin, a phenoxy resin, a fluorine-based resin such as a polytetrafluoroethylene resin, and further include resins selected from thermoplastic elastomers such as a polystyrene-based resin, a polyolefin-based resin, a polyurethane-based resin, a polyester-based resin, a polyamide-based resin, a polybutadiene-based resin, a polyisoprene-based resin, and a fluorine-based resin. In particular, from the viewpoint of mechanical properties and heat resistance, a thermoplastic resin selected from a polyphenylene sulfide resin (PPS), a polyarylene ether ketone resin (PAEK), a polyether sulfone resin (PES), a polyether imide (PEI), and a liquid crystal polymer (LCP) is more preferably used.

Examples of the polyarylene ether ketone resin (PAEK) may include polyether ketone (PEK), polyether ether ketone (PEEK), polyether ether ketone ketone (PEEKK), polyether ketone ketone (PEKK), polyether ketone ether ketone ketone (PEKEKK), polyether ether ketone ether ketone (PEEKEK), polyether ether ether ketone (PEEEK), polyether diphenyl ether ketone (PEDEK), and copolymers, modified products, and resins obtained by blending two or more of them.

The fiber-reinforced thermoplastic resin base material according to the present invention is formed by impregnating continuous reinforcing fibers with the thermoplastic resin, and may further contain a filler, various additives, and the like as necessary.

As the filler, any filler that is generally used as a filler for resin can be used, and the strength, rigidity, heat resistance and dimensional stability of a fiber-reinforced thermoplastic resin base material and a molded article using the same can be further improved. Examples of the filler include fibrous inorganic fillers such as glass fibers, carbon fibers, potassium titanate whiskers, zinc oxide whiskers, aluminum borate whiskers, aramid fibers, alumina fibers, silicon carbide fibers, ceramic fibers, asbestos fibers, gypsum fibers and metal fibers; and nonfibrous inorganic fillers such as wollastonite, zeolite, sericite, kaolin, mica, talc, clay, pyrophyllite, bentonite, montmorillonite, asbestos, aluminosilicate, alumina, silicon oxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide and silica. Two or more of these compounds may be used in combination. These fillers may be hollow. The filler may be treated with a coupling agent such as an isocyanate-based compound, an organosilane-based compound, an organic titanate-based compound, an organoborane-based compound or an epoxy compound. Organized montmorillonite obtained by cation-exchanging interlayer ions with an organic ammonium salt may be used as montmorillonite. When a fibrous filler is made of discontinuous fibers, the function can be imparted to the fibrous filler without impairing the reinforcing effect of the reinforcing fibers made of continuous fibers.

Examples of the various kinds of additives include antioxidants and heat stabilizers (hindered phenol-based agents, hydroquinone-based agents, phosphite-based agents, substituted products thereof, copper halides, iodine compounds and the like); weathering agents (resorcinol-based agents, salicylate-based agents, benzotriazole-based agents, benzophenone-based agents, hindered amine-based agents and the like); mold release agents and lubricants (aliphatic alcohols, aliphatic amides, aliphatic bisamides, bis-urea, polyethylene wax and the like); pigments (cadmium sulfide, phthalocyanine, carbon black and the like); dyes (nigrosine, aniline black and the like); plasticizers (p-oxybenzoic acid octyl, N-butylbenzenesulfonamide and the like); antistatic agents (alkyl sulfate-type anion-based antistatic agents, quaternary ammonium salt-type cation-based antistatic agents, nonionic antistatic agents such as polyoxyethylene sorbitan monostearate, betaine-based amphoteric antistatic agents and the like); and flame retardants (melamine cyanurate, hydroxides such as magnesium hydroxide and aluminum hydroxide, ammonium polyphosphate, brominated polystyrene, brominated polyphenylene oxide, brominated polycarbonate, brominated epoxy resins, combinations of these bromine-based flame retardants and antimony trioxide, and the like). Two or more of these may be blended.

The fiber-reinforced thermoplastic resin base material according to the present invention can be obtained by impregnating the continuous reinforcing fibers with a thermoplastic resin.

Examples of the impregnating method include a film method in which a film-shaped thermoplastic resin is melted and pressed to impregnate a reinforcing fiber bundle with a thermoplastic resin, a comingled method in which after blending a fibrous thermoplastic resin with a reinforcing fiber bundle, the fibrous thermoplastic resin is melted and pressed to impregnate the reinforcing fiber bundle with the fibrous thermoplastic resin, a powder method in which a powdered thermoplastic resin is dispersed in a gap between fibers in a reinforcing fiber bundle and then the powdered thermoplastic resin is melted and pressed to impregnate the reinforcing fiber bundle with the thermoplastic resin, and a pultrusion method in which a reinforcing fiber bundle is immersed in a molten thermoplastic resin and pressed to impregnate the reinforcing fiber bundle with the thermoplastic resin. The pultrusion method is preferable because it is possible to prepare various kinds of fiber-reinforced thermoplastic resin base materials having various thicknesses and fiber volume contents, and the powder impregnation method is preferable because it is possible to prepare a fiber-reinforced thermoplastic resin base material having good fiber dispersibility and impregnability.

The thickness of the fiber-reinforced thermoplastic resin base material according to the present invention is preferably 0.05 to 0.5 mm. When the thickness is 0.05 mm or more, the strength of a molded article obtained using the fiber-reinforcing fiber-reinforced thermoplastic resin base material can be improved. The thickness is more preferably 0.07 mm or more. On the other hand, when the thickness is 0.5 mm or less, the reinforcing fibers are more easily impregnated with the thermoplastic resin. The thickness is more preferably 0.4 mm or less, and further preferably 0.3 mm or less.

The fiber volume content Vf (%) of the fiber-reinforced thermoplastic resin base material according to the present invention is preferably 40% or more and 70% or less. When the fiber-reinforced thermoplastic resin base material contains 40% or more of reinforcing fibers, the strength of the molded article obtained using the fiber-reinforced thermoplastic resin base material can be more improved. The fiber volume content is more preferably 45% or more, still more preferably 50% or more. On the other hand, the thermoplastic resin is more easily impregnated into the reinforcing fibers by containing the reinforcing fibers in a range of 70% or less. The fiber volume content is more preferably 65% or less, and still more preferably 60% or less.

The fiber volume content Vf (%) of the fiber-reinforced thermoplastic resin base material can be calculated from Equation (1) by measuring the mass W0 (g) of the fiber-reinforced thermoplastic resin base material, then heating the fiber-reinforced thermoplastic resin base material at 550°C for 240 minutes in air to burn off the thermoplastic resin component, and measuring the mass W1 (g) of the remaining reinforcing fibers.

$$Vf\ (vol\%) = (W1/\rho f)/\{W1/\rho f + (W0 - W1)/\rho r\} \times 100 \ \ldots$$

$$(1)$$

$\rho$f: Density of reinforcing fiber (g/cm$^3$)
$\rho$r: Density of thermoplastic resin (g/cm$^3$)

In the present invention, the content (porosity) of voids contained in the fiber-reinforced thermoplastic resin base material is preferably 2% or less. When the porosity is 2% or less, the mechanical properties of the fiber-reinforced thermoplastic resin base material can be exhibited without impairing the mechanical properties of the reinforcing fibers. The porosity is more preferably 1.5% or less, and still more preferably 1% or less.

The porosity is determined by observing the cross section of the fiber-reinforced thermoplastic resin base material in the thickness direction as follows. A fiber-reinforced thermoplastic resin base material is embedded in an epoxy resin, and the sample is polished until a cross-section of the base material in the thickness direction can be favorably observed. Thereafter, the polished cross section is photographed at a magnification of 400 times using an ultra-depth color 3D shape measuring microscope VHX-9500 (controller unit)/VHZ-100R (measurement unit) (manufactured by KEYENCE CORPORATION). The photographing range is a range of thickness × width 500 μm of the fiber-reinforced thermoplastic resin base material. In the photographed image, the cross-sectional area of the base material and the area of a portion that is a gap (void) are obtained, and the porosity is calculated by Equation (2).

$$Porosity\ (\%) = (total\ area\ of\ sites\ occupied\ by$$

$$voids)/(total\ area\ of\ base\ material) \times 100 \ \ldots\ (2)$$

Next, a method for producing a fiber-reinforced thermoplastic resin base material according to the present invention will be described in detail.

Examples of a manufacturing apparatus includes a creel portion capable of holding one or a plurality of bobbins around which a reinforcing fiber bundle before being impregnated with a matrix resin is wound, a feed portion that continuously feeds the reinforcing fiber bundle from the creel portion, an impregnation molding die that causes a molten matrix resin to adhere to the continuously fed reinforcing fiber bundle, applies pressure to impregnate the reinforcing fiber bundle, and shapes the reinforcing fiber bundle into a predetermined shape, and a cooling roll for cooling and solidifying the molten matrix resin to form a fiber-reinforced thermoplastic resin base material.

In an impregnation step, the continuously fed reinforcing fiber bundle is heated to a temperature equal to or higher than the melting point or glass transition temperature of the thermoplastic resin, and the molten matrix resin is applied and impregnated. The continuously fed reinforcing fiber bundles usually have a thin layered form. In the manufacturing apparatus, first, a plurality of bobbins around which a reinforcing fiber bundle obtained by collecting 1,000 to 50,000 monofilaments of continuous reinforcing fibers into a bundle is wound is prepared. Then, the reinforcing fiber bundles are pulled out from the plurality of bobbins, arranged side by side to form a thin layer (tape shape) as a whole, and the reinforcing fiber bundles are made to enter the impregnation molding die in which the molten matrix resin is stored through the plurality of yarn path guides. At this time, the reinforcing fiber bundle may be a single layer, or may be made to enter the impregnation molding die in a state of being stacked in two or more layers. By stacking the reinforcing fiber bundles in two or more layers, it is easy to adjust the dimension.

The impregnation molding die provided in the manufacturing apparatus is configured to face a transfer direction of the reinforcing fiber bundle, and the matrix resin supplied from the feeder is stored in the impregnation molding die in a molten state. An inlet hole through which the reinforcing fiber bundle can pass is formed at an inlet of the impregnation molding die located upstream in the transfer direction of the reinforcing fiber bundle, and the reinforcing fiber bundle enters the inside of the impregnation molding die through the inlet hole. The inside of the impregnation molding die has a configuration in which the cross-sectional area intermittently decreases in the traveling direction of the fiber, and a slit-shaped nozzle having a cross-sectional area smaller than the cross-sectional area of the inlet hole on the upper surface (the introduction side of the reinforcing fiber bundle) of the resin storage portion is formed at the outlet of the impregnation molding die. Since the reinforcing fiber bundle is taken up in the nozzle direction with the accompanying flow of the matrix resin, the pressure of the resin increases from the inlet hole toward the nozzle direction, and the reinforcing fiber bundle is impregnated with the matrix resin. At this time, it is also possible to introduce a plurality of reinforcing fiber bundles into the impregnation molding die in a single layer state in order to shape the reinforcing fiber bundles in an optional thickness, and stack the reinforcing fiber bundles in a state where each layer is attached to and impregnated with a matrix resin.

As described above, the fiber-reinforced thermoplastic resin base material can be obtained by passing the reinforcing fiber bundle through the impregnation molding die, attaching the resin, and stacking as necessary, but it is also possible to completely impregnate the reinforcing fiber bundle with the matrix resin by further applying heat and pressure to the base material.

The laminate according to the present invention is formed by stacking five or more layers of fiber-reinforced thermoplastic resin base materials as described above.

The laminate in the present invention is preferably integrated by applying heat and/or pressure. Examples of the method for applying heat and/or pressure include a press molding method in which a fiber-reinforced thermoplastic resin base material stacked in an optional configuration is placed in a mold or on a press plate, and then the mold or the press plate is closed and pressed, a vacuum press method in which press molding is performed in a state where the inside of the mold or the entire press machine is reduced in pressure, an autoclave molding method in which the fiber-reinforced thermoplastic resin base material stacked in an optional configuration is introduced into an autoclave and pressurized and heated, a bugging molding method in which a fiber-reinforced thermoplastic resin base material stacked in an optional configuration is wrapped with a film or the like and heated in an oven while the inside is reduced in pressure and pressurized at atmospheric pressure, and a wrapping tape method in which a tape is wound around a fiber-reinforced polymer alloy base material (fiber-reinforced thermoplastic resin base material) stacked in an optional configuration while applying tension, and heated in an oven, and an internal pressure molding method in which a fiber-reinforced polymer alloy base material (fiber-reinforced thermoplastic resin base material) stacked in an optional configuration is placed in a mold, and a gas, a liquid, or the like is injected into a core placed in the mold and pressurized.

In the laminate of the present invention, the fiber-reinforced thermoplastic resin base materials are stacked such that reinforcing fibers are oriented in different directions from each other between layers of a plurality of fiber-reinforced thermoplastic resin base materials present near at least one surface layer, and such that a contact ratio of the reinforcing fibers is equal to or more than a certain value at an interface between the layers. With such a configuration, when the laminates according to the present invention are welded to each other or the laminate according to the present invention and another member are welded to each other by induction heating, induction heating is likely to be performed near the surface layer, and on the other hand, induction heating is less likely to be performed at a place away from the surface layer, so that it is possible to prevent deterioration of the resin and occurrence of microcracks, and as a result, it is possible to efficiently weld both of them while reducing the influence on the physical properties.

Specifically, for example, among the five or more layers of fiber-reinforced thermoplastic resin base materials constituting the laminate, the orientation direction of reinforcing fibers constituting a fiber-reinforced thermoplastic resin base material S1 constituting at least one outermost layer is set to be different from an orientation direction of reinforcing fibers constituting a fiber-reinforced thermoplastic resin base material S2 located at a second layer from the outermost layer by 10° to 90°, a fiber-fiber contact percentage is 20% or more and 100% or less in a boundary layer $I_{12}$ between the fiber-reinforced thermoplastic resin base material S1 and the fiber-reinforced thermoplastic resin base material S2, and the fiber-fiber contact percentage is set to be less than 20% between fiber-reinforced thermoplastic resin base materials other than the boundary layer $I_{12}$ (aspect (i)).

Further, among the five or more layers of fiber-reinforced thermoplastic resin base materials constituting the laminate, the orientation direction of reinforcing fibers constituting a fiber-reinforced thermoplastic resin base material S1 constituting at least one outermost layer is set to be different from an orientation direction of reinforcing fibers constituting a fiber-reinforced thermoplastic resin base material S2 located at a second layer from the outermost layer by 10° to 90°, the orientation direction of reinforcing fibers constituting the fiber-reinforced thermoplastic resin base material S2 located at the second layer from the outermost layer is set to be different from an orientation direction of reinforcing fibers constituting a fiber-reinforced thermoplastic resin base material S3 located at a third layer from the outermost layer by 10° to 90°, and the fiber-fiber contact percentage is 20% or more and 100% or less in a boundary layer $I_{12}$ between the fiber-reinforced thermoplastic resin base material S1 and the fiber-reinforced thermoplastic resin base material S2 and in a boundary layer $I_{23}$ between the fiber-reinforced thermoplastic resin base material S2 and the fiber-reinforced thermoplastic resin base material S3, and the fiber-fiber contact percentage may be less than 20% between fiber-reinforced thermoplastic resin base materials other than the boundary layer $I_{12}$ and the boundary layer $I_{23}$ (aspect (ii)).

By shifting the orientation angle at least between the fiber-reinforced thermoplastic resin base materials S1 and S2, or between the fiber-reinforced thermoplastic resin base materials S1 and S2 and between the fiber-reinforced thermoplastic resin base materials S2 and S3 by 10° to 90° (that is, by making the lamination angle substantially different), the reinforcing fibers present near the surface layer of the laminate are likely to come into contact with each other. As a result, during the induction heating, a circuit is formed between the fiber-reinforced thermoplastic resin base materials in the vicinity of the surface layer, and a current easily flows, so that the laminate can be efficiently heated. In addition, since heating is performed from the outermost layer side of the laminate in the induction heating, the surface layer of the thermoplastic resin laminate forming the welded surface is efficiently heated by shifting the orientation angle as described above. That is, according to the present invention, it is possible to obtain a laminate suitable for induction welding.

The expression "at least one outermost layer" in any of the aspects (i) and (ii) means that an aspect in which the lamination angle and a high fiber-fiber contact percentage to be described later are achieved in the vicinity of one surface layer of the laminate and an aspect in which the lamination angle and the high fiber-fiber contact percentage are achieved in the vicinity of both surface layers are included in the present invention.

It is important that the fiber-fiber contact percentage is 20% or more and 100% or less between the fiber-reinforced thermoplastic resin base materials in the vicinity of the surface layer having different lamination angles as described above. That is, in the aspect (i), in the boundary layer $I_{12}$ between the fiber-reinforced thermoplastic resin base material S1 and the fiber-reinforced thermoplastic resin base material S2, and in the aspect (ii), in addition to the boundary layer $I_{12}$, in the boundary layer $I_{23}$ between the fiber-reinforced thermoplastic resin base material S2 and the fiber-reinforced thermoplastic resin base material S3, the fiber-fiber contact percentage is set to 20% to 100%. When the fiber-fiber contact percentage is 20% or more, a current easily flows between the base materials, and therefore heating characteristics are excellent. The higher the contact ratio is, the better it is, and up to 100% or less is acceptable. The contact ratio is more preferably 30% or more and 100% or less. The contact ratio is still more preferably 40% or more and 100% or less.

Examples of the method for adjusting the fiber-fiber contact percentage include a method of providing a resin layer on a fiber-reinforced thermoplastic resin base material, a method for using fiber-reinforced thermoplastic resin base materials having different fiber volume contents, and a method for inserting a resin film between fiber-reinforced thermoplastic resin base materials when the fiber-reinforced thermoplastic resin base materials are stacked. Since the thickness of the resin layer formed between layers can be easily adjusted by changing the type of the resin of the film, a method for inserting the resin film between layers when stacking the fiber-reinforced thermoplastic resin base material is preferable.

On the other hand, the fiber-fiber contact percentage is set to less than 20% between fiber-reinforced thermoplastic resin base materials other than the vicinity of the surface layer, that is, between the fiber-reinforced thermoplastic resin base materials other than the boundary layer $I_{12}$ in the aspect (i), and between the fiber-reinforced thermoplastic resin base materials other than the boundary layer $I_{12}$ and the boundary layer $I_{23}$ in the aspect (ii). As a result, a portion other than the vicinity of the surface layer of the laminate to be induction-welded is less likely to be heated; in this portion, it is possible to prevent resin decomposition due to heating. Further, it is possible to prevent the occurrence of microcracks. Between the fiber-reinforced thermoplastic resin base materials other than those in the vicinity of the surface layer, the lamination angles may or may not be substantially uniform.

The fiber-fiber contact percentage between the fiber-reinforced thermoplastic resin base materials is calculated as follows. The laminate as a sample is embedded in an epoxy resin ("Epoquick" (registered trademark) manufactured by Buehler) and cured at room temperature for 24 hours. Thereafter, a cross section substantially perpendicular to the orientation direction of the reinforcing fibers in the laminate is polished, and then the polished surface is photographed at a magnification of 1000 times using an ultra-depth color 3D shape measuring microscope VHX-9500 (controller unit)/VHZ-100R (measurement unit) (manufactured by KEYENCE CORPORATION). The photographing range is set to a range of a vertical width of 250 $\mu$m and a horizontal width of 330 $\mu$m, and the space between the two base materials is photographed.

A method for calculating the fiber-fiber contact percentage using the photographed image will be described with reference to Fig. 1. A perpendicular line is drawn from the center of a reinforcing fiber monofilament 1 constituting one fiber-reinforced thermoplastic resin base material toward the other fiber-reinforced thermoplastic resin base material. Then, a reinforcing fiber monofilament 2 closest to the reinforcing fiber monofilament 1, which is present on the perpendicular line and in the adjacent layer (that is, in the other fiber-reinforced thermoplastic resin base material), is selected, and an inter-fiber distance 3 is measured using image processing. The distance between contact points each defined by the outer peripheries of the reinforcing fiber monofilaments 1 and 2 and the perpendicular line is measured as the inter-fiber distance 3. (Here, when another reinforcing fiber monofilament 1 is present on the perpendicular line, the measurement is not performed, and a different reinforcing fiber monofilament 1 is selected.) In the measurement, 400 monofilaments in the same layer are randomly selected, and the inter-fiber distance 3 is measured for each monofilament. When the inter-fiber distance 3 is 3 $\mu$m or less, it is defined as "fiber contact", and the fiber-fiber contact percentage is calculated by Equation (3).

```
Fiber-fiber contact percentage [%] = (number of

monofilaments in fiber contact)/(number of measured

monofilaments) × 100 ... (3)
```

As described above, the fiber-fiber contact percentage for each boundary between the fiber-reinforced thermoplastic resin base materials present in the laminate is calculated.

In the present invention, it is also a preferable aspect to form a resin layer having a thickness of 1 to 50 $\mu$m on the surface layer of the fiber-reinforced thermoplastic resin base material constituting at least one surface of the laminate. By forming the resin layer, high welding strength can be more easily exhibited without impairing the mechanical properties of the fiber-reinforced thermoplastic resin base material at the time of welding. Such a resin layer may be formed only on one side or on both sides of the laminate. From the viewpoint of adhesiveness, a resin layer is preferably formed at least on the welding surface. Furthermore, such a resin layer may be the same type of thermoplastic resin as the matrix resin constituting the fiber-reinforced thermoplastic resin base material, or may be another thermoplastic resin. The same type of resin is preferable from the viewpoint of adhesiveness.

Examples the thermoplastic resin used for the resin layer formed on the surface of the laminate include polyesters such as a polyethylene terephthalate (PET) resin, a polybutylene terephthalate (PBT) resin, a polytrimethylene terephthalate (PTT) resin, a polyethylene naphthalate (PEN) resin, and a liquid crystal polyester resin, polyolefins such as a polyethylene (PE) resin, a polypropylene (PP) resin, and a polybutylene resin, a styrene-based resin, a polyoxymethylene (POM) resin, a polyamide (PA) resin, a polycarbonate (PC) resin, a polymethylene methacrylate (PMMA) resin, a polyvinyl chloride (PVC) resin, a polyphenylene sulfide (PPS) resin, a polyphenylene ether (PPE) resin, a modified PPE resin, a polyimide (PI) resin, a polyamideimide (PAI) resin, a polyetherimide (PEI) resin, a polysulfone (PSU) resin, a modified PSU resin, a polyethersulfone resin, a polyketone (PK) resin, a polyarylene etherketone resin (PAEK), a polyarylate (PAR) resin, a polyethernitrile (PEN) resin, a phenolic resin, a phenoxy resin, a fluorine-based resin such as a polytetrafluoroethylene resin, and further include resins selected from thermoplastic elastomers such as a polystyrene-based resin, a polyolefin-based resin, a polyurethane-based resin, a polyester-based resin, a polyamide-based resin, a polybutadiene-based resin, a polyisoprene-based resin, and a fluorine-based resin.

Examples of the polyarylene ether ketone resin (PAEK) may include polyether ketone (PEK), polyether ether ketone (PEEK), polyether ether ketone ketone (PEEKK), polyether ketone ketone (PEKK), polyether ketone ether ketone (PEKEKK), polyether ether ketone ether ketone (PEEKEK), polyether ether ether ketone (PEEEK), polyether diphenyl ether ketone (PEDEK), and copolymers, modified products, and resins obtained by blending two or more of them.

The resin layer formed on the surface of the laminate may further contain a filler, various additives, and the like as necessary. Fillers and various additives used for the matrix resin described above can be used.

The welded article of the present invention can be obtained by stacking at least one or more of the above-described laminates, and performing induction heating as well as applying pressure to the laminates for welding the laminates.

In the welded article according to the present invention, two or more laminates according to the present invention may be stacked, or the laminate according to the present invention may be stacked with another fiber-reinforced material, a metal material, an inorganic material, or an organic material. From the viewpoint of weldability, it is preferable to stack two or more laminates of the same type.

In the present invention, induction heating is performed by energizing an induction coil to generate a magnetic field and generating an induction current in a fiber-reinforced thermoplastic resin base material. The induction coil can be optionally selected according to the size and shape of the laminate.

It is preferable to apply pressure to the laminate while performing induction heating. Examples of the method for applying pressure include a method for pressing an induction coil, a method for applying pressure while moving behind the induction coil with a roller, and a method for putting a laminate in a vacuum bag, drawing vacuum, and applying the pressure.

The laminate and the welded article of the present invention can be used for various applications such as aircraft components, automobile components, electric and electronic components, building components, various containers, daily necessities, household goods, and sanitary articles, based on the excellent properties thereof. The laminate and the welded article in the present invention are particularly preferably used for aircraft engine peripheral parts, exterior parts for aircraft parts, vehicle skeletons as automobile body parts, automobile engine peripheral parts, automobile underhood parts, automobile gear parts, automobile interior parts, automobile exterior parts, intake and exhaust system parts, engine cooling water system parts, automobile electrical parts, and electric and electronic parts which are required to have stable mechanical properties.

Specifically, the laminate and the welded article according to the present invention include aircraft engine peripheral parts such as fan blades; aircraft-related components such as a landing gear pod, a winglet, a spoiler, an edge, a ladder, an elevator, a fairing, and a rib; automobile body components such as various seats, a front body, an underbody, various pillars, various members, various frames, various beams, various supports, various rails, and various hinges; automobile engine peripheral parts such as an engine cover, an air intake pipe, a timing belt cover, an intake manifold, a filler cap, a throttle body, and a cooling fan; automobile underhood components such as a cooling fan, top and base of a radiator tank, a cylinder head cover, an oil pan, brake piping, tubes for fuel piping, and exhaust gas system components; automobile gear components such as a gear, an actuator, a bearing retainer, a bearing cage, a chain guide, and a chain tensioner; automobile interior parts such as a shift lever bracket, a steering lock bracket, a key cylinder, a door inner handle, a door handle cowl, an indoor mirror bracket, an air conditioner switch, an instrumental panel, a console box, a glove box, a steering wheel, and a trim; automobile exterior parts such as a front fender, a rear fender, a fuel lid, a door panel, a cylinder head cover, a door mirror stay, a tailgate panel, a licensed garnish, a roof rail, an engine mount bracket, a rear garnish, a rear spoiler, a trunk lid, a rocker molding, a molding, a lamp housing, a front grill, a mud guard, and a side bumper; intake and exhaust system parts such as an air intake manifold, an intercooler inlet, a turbocharger, an exhaust pipe cover, an inner bush, an engine mount, an engine head cover, a resonator, and a throttle body; engine cooling water system parts such as a chain cover, a thermostat housing, an outlet pipe, a radiator tank, an alternator, and a delivery pipe; automobile electrical components such as a connector and a wire harness connector, a motor parts, a lamp socket, a sensor onboard switch, and a combination switch; as well as electric and electronic components including electric components such as an electric generator, an electric motor, a transformer, a current transformer, a voltage regulator, a rectifier, a resistor, an inverter, a relay, a power contact, an electric switch, an interrupter, a switch, a knife switch, a multi-pole rod, a motor case, a TV housing, a laptop housing and internal parts, a CRT display housing and internal parts, a printer housing and internal parts, mobile terminal housings and internal parts such as a mobile phone, a mobile personal computer, and a handheld mobile terminal, IC-and LED-compatible housings, a capacitor plate, a fuse holder, various gears, various cases, and a cabinet, and electronic components such as a connector, an SMT-compatible connector, a card connector, a jack, a coil, a coil bobbin, a sensor, an LED lamp, a socket, a resistor, a relay, a relay case, a reflector, a small switch, a power supply part, a coil bobbin, a capacitor, a variable capacitor case, an optical pickup chassis, an oscillator, various terminal boards, a transformer, a plug, a printed circuit board, a tuner, a speaker, a microphone, a headphone, a small motor, a magnetic head base, a power module, a Si power module and a SiC power module, a semiconductor, a liquid crystal, a FDD carriage, a FDD chassis, a motor brush holder, a transformer member, a parabolic antenna, and a computer-related component.

EXAMPLES

Hereinafter, the present invention will be described further in detail by way of examples, but the present invention is not limited to these examples described below. In examples and comparative examples, physical properties were evaluated in accordance with the following methods.

[Thickness of fiber-reinforced thermoplastic resin base material]

The thickness of the thermoplastic resin base material used for forming the laminate was measured at three points in the width direction, and the average value of the three points was taken as the thickness of the fiber-reinforced thermoplastic resin base material.

[Thickness of resin layer on surface of laminate]

The laminate as a sample was embedded in an epoxy resin ("Epoquick" (registered trademark) manufactured by Buehler) and cured at room temperature for 24 hours. Thereafter, a cross section substantially perpendicular to the orientation direction of the reinforcing fibers in the laminate was polished, and then the polished surface was photographed at a magnification of 1000 times using an ultra-depth color 3D shape measuring microscope VHX-9500 (controller unit)/VHZ-100R (measurement unit) (manufactured by KEYENCE CORPORATION). The distance from the reinforcing fiber of the surface layer to the surface was measured at 10 points, and the average value was taken as the thickness of the resin layer. At this time, the measured 10 points were selected so as to be separated from each other by 50 $\mu$m or more in the plane direction.

[Fiber-fiber contact percentage]

The laminate as a sample was embedded in an epoxy resin ("Epoquick" (registered trademark) manufactured by Buehler) and cured at room temperature for 24 hours. Thereafter, a cross section substantially perpendicular to the orientation direction of the reinforcing fibers in the laminate was polished, and then the polished surface was photographed at a magnification of 1000 times using an ultra-depth color 3D shape measuring microscope VHX-9500 (controller unit)/VHZ-100R (measurement unit) (manufactured by KEYENCE CORPORATION). Between the layers, inter-fiber distance between randomly selected 400 pairs of fibers was measured using image analysis software, and the fiber-fiber contact percentage was determined using Equation (3).

[Fiber volume content]

The fiber volume content Vf (%) of the fiber-reinforced thermoplastic resin base material was calculated from Equation (1) by measuring the mass W0 of the fiber-reinforced thermoplastic resin base material obtained by the respective examples and comparative examples, then heating the fiber-reinforced thermoplastic resin base material at 550°C for 240 minutes in air to burn off the resin component, and measuring the mass W1 of the remaining reinforcing fibers.

[Heating rate]

The heating rate of the laminate obtained in each of examples and comparative examples was evaluated as follows. Using an inverter (EASYHEAT 8310 LI) manufactured by Aronix Co., Ltd., an induction current was applied to a laminate of 100 mm × 100 mm at a current of 150 A, a tap number of 16, and a coil and a sample distance of 2 mm. After measuring the initial temperature, the temperature was raised until the surface temperature of the laminate reached 200°C, and the time to reach 200°C was measured. The heating rate was evaluated in the following two stages, and good was regarded as acceptable.

Good: Surface temperature reached 200°C and reaching time was less than 20 seconds.

Poor: The surface temperature did not reach 200°C or the reaching time was 20 seconds or more.

[Raw materials]

In examples and comparative examples, the following raw materials were used.
Carbon fiber bundle: T700S-12K manufactured by TORAY INDUSTRIES, INC.
Thermoplastic resin:

Polyphenylene sulfide: "TORELINA (registered trademark)" manufactured by TORAY INDUSTRIES, INC.
Polyether ether ketone: "PEEK 90 G" (registered trademark) manufactured by VICTREX Corporation

(Example 1)

A reinforced thermoplastic resin base material A having a fiber volume content of 60% and a fiber-reinforced thermoplastic resin base material B having a fiber volume content of 40% were produced by the following methods, respectively. That is, 16 bobbins each wound with the carbon fiber bundles were prepared, and the carbon fiber bundles were each continuously fed out from the bobbin through a thread path guide. The continuously fed carbon fiber bundles were impregnated with the thermoplastic resin quantitatively supplied from the filled feeder in an impregnation molding die. The carbon fiber bundle impregnated with the thermoplastic resin in the impregnation molding die was continuously withdrawn from the nozzle of the impregnation molding die at a withdrawal rate of 1 m/min using a drawing roll. Thereafter, the carbon fiber bundle in which the thermoplastic resin was cooled and solidified by passing through the cooling roll was wound up to a winding machine as a continuous fiber-reinforced thermoplastic resin base material. The thickness of the obtained fiber-reinforced thermoplastic resin base material was 0.09 mm when the fiber volume content was 60%, and it was 0.11 mm and a width thereof was 50 mm when the fiber volume content was 40%, and the reinforcing fibers were arranged in one direction.
The obtained fiber-reinforced thermoplastic resin base materials A and B were stacked as described in the column of lamination configuration in Table 1, and integrated by applying a pressure of 1.5 MPa. Then, a resin layer made of the same resin as that of each fiber-reinforced thermoplastic resin base material was provided on both surfaces of the obtained stacked plate (laminate), and subjected to the above evaluation. The evaluation results are shown in Table 1.

(Example 2, Comparative Example 1)

A laminate was obtained in the same manner as in Example 1 except that the lamination configuration was changed to the conditions shown in Table 1. The obtained laminate was subjected to the above-mentioned evaluation. The evaluation results are shown in Table 1.

(Example 3, Comparative Examples 2 and 3)

A laminate was obtained in the same manner as in Example 1 except that the thermoplastic resin was changed to the conditions shown in Table 2. The obtained laminate was subjected to the above-mentioned evaluation. The results of the evaluation are shown in Table 2.

As can be seen from Tables 1 and 2, the laminate according to the aspect in which the base material constituting the surface layer is stacked with the orientation angle of the fiber shifted with respect to the base material stacked adjacent to each other, or the laminate according to the aspect in which the base material located at the second layer from the surface layer is stacked with the orientation angle of the fiber shifted with respect to the base material located at the third layer from the surface layer is excellent in the heating characteristics during the induction heating.

(Example 4, Example 5, Comparative Example 4)

A laminate was obtained in the same manner as in Example 1 except that the fiber-fiber contact percentage was changed to the conditions shown in Table 3. The obtained laminate was subjected to the above-mentioned evaluation. The evaluation results are shown in Table 3.

As can be seen from Table 3, a sample in which the fiber-fiber contact percentage exceeds 20% at an interface between layers where reinforcing fibers are oriented in different directions from each other is excellent in the heating characteristics.

[Table 1]

| | | | | Example 1 | Example 2 | Comparative Example 1 |
|---|---|---|---|---|---|---|
| Raw material | Reinforcing fiber | | | CF | CF | CF |
| | Resin | | | PPS | PPS | PPS |
| Tape state | A | Volume content | % | 60 | 60 | 60 |
| | | Thickness | mm | 0.09 | 0.09 | 0.09 |
| | B | Volume content | % | 40 | 40 | 40 |
| | | Thickness | mm | 0.11 | 0.11 | 0.11 |
| Laminate state | Total number of layers | | Sheets | 8 | 8 | 8 |
| | Lamination configuration | Base material used | - | A/A/A/B/B/A/A/A | A/A/A/B/B/A/A/A | A/A/A/B/B/A/A/A |
| | | Orientation angle of fibers | ° | 90/0/0/0/0/0/0/90 | 0/90/0/0/0/0/90/0 | 0/0/0/0/0/0/0/0 |
| | Fiber-fiber contact percentage between layers | | % | 28/22/17/16/15/22/28 | 28/25/15/17/16/26/28 | 23/23/15/18/17/21/22 |
| | Resin layer thickness | | um | 2 | 2 | 2 |
| Evaluation of heating | Heating rate | | | Good | Good | Poor |

EP 4 122 667 A1

[Table 2-1]

| | | | | Example 3 | Comparative Example 2 |
|---|---|---|---|---|---|
| Raw material | Reinforcing fiber | | | CF | CF |
| | Resin | | | PEEK | PEEK |
| Tape state | A | Volume content | % | 60 | 60 |
| | | Thickness | mm | 0.09 | 0.09 |
| | B | Volume content | % | 40 | 40 |
| | | Thickness | mm | 0.11 | 0.11 |
| Laminate state | Total number of layers | | Sheets | 12 | 12 |
| | Lamination configuration | Base material used | - | A/A/A/B/B/B/B/B/A/A/A | A/A/A/B/B/B/B/B/A/A/A |
| | | Orientation angle of fibers | ° | 0/90/0/90/0/90/90/0/90/0/90/0 | 0/0/0 ... 0/0/0 |
| | Fiber-fiber contact percentage between layers | | % | 28/22/17/17/18/18/16/16/15/22/28 | 28/25/15/18/17/18/17/16/16/26/28 |
| | Resin layer thickness | | μm | 2 | 2 |
| Evaluation of heating | Heating rate | | | Good | Poor |

EP 4 122 667 A1

[Table 2-2]

| | | | | Comparative Example 3 |
|---|---|---|---|---|
| Raw material | Reinforcing fiber | | | CF |
| | Resin | | | PEEK |
| Tape state | A | Volume content | % | 60 |
| | | Thickness | mm | 0.09 |
| | B | Volume content | % | 40 |
| | | Thickness | mm | 0.11 |
| Laminate state | Total number of layers | | Sheets | 12 |
| | Lamination configuration | Base material used | - | A/A/A/B/B/B/B/B/A/A/A |
| | | Orientation angle of fibers | ° | 3/0/0/0/0/0/0/0/0/0/3 |
| | Fiber-fiber contact percentage between layers | | % | 23/23/15/18/17/18/16/18/16/21/22 |
| | Resin layer thickness | | $\mu$m | 2 |
| Evaluation of heating | Heating rate | | | Poor |

[Table 3]

| | | | | Example 4 | Example 5 | Comparative Example 4 |
|---|---|---|---|---|---|---|
| Raw material | Reinforcing fiber | | | CF | CF | CF |
| | Resin | | | PPS | PPS | PPS |
| Tape state | A | Volume content | % | 60 | 60 | 60 |
| | | Thickness | mm | 0.09 | 0.09 | 0.09 |
| | B | Volume content | % | 40 | 40 | 40 |
| | | Thickness | mm | 0.11 | 0.11 | 0.11 |
| Laminate state | Total number of layers | | Sheets | 8 | 8 | 8 |
| | Lamination configuration | Base material used | | A/A/B/B/B/B/A/A | A/A/B/B/B/B/B/B | B/B/B/B/B/B/B/B |
| | | Orientation angle of fibers | ° | 0/90/0/90/90/0/90/0 | 0/90/0/90/90/0/90/0 | 0/90/0/90/90/0/90/0 |
| | Fiber-fiber contact percentage between layers | | % | 28/26/17/16/16/27/26 | 28/25/15/17/16/16/17 | 17/16/15/16/18/17/17 |
| | Resin layer thickness | | μm | 2 | 2 | 2 |
| Evaluation of heating | Heating rate | | | Good | Good | Poor |

EP 4 122 667 A1

17

INDUSTRIAL APPLICABILITY

The laminate and the welded article of the present invention can be molded into a desired shape by any molding method such as autoclave molding, press molding, or film molding. The molded article using the laminate and the welded article according to the present invention is effective for, for example, automobile applications such as aircraft engine peripheral parts, aircraft interior parts, aircraft exterior parts, vehicle skeletons as automobile body parts, automobile engine peripheral parts, automobile underhood parts, automobile gear parts, automobile interior parts, automobile exterior parts, intake and exhaust system parts, engine cooling water system parts, automobile electrical parts, and electric and electronic part applications such as LED reflectors and SMT connectors.

DESCRIPTION OF REFERENCE SIGNS

1: Reinforcing fiber monofilament
2: Reinforcing fiber monofilament of adjacent layer
3: Inter-fiber distance

**Claims**

1. A laminate in which five or more layers of fiber-reinforced thermoplastic resin base materials are stacked, wherein the fiber-reinforced thermoplastic resin base materials are obtained by impregnating continuous reinforcing fibers having conductivity, which are aligned in parallel, with a thermoplastic resin, and any one of the following is satisfied:

   (i) among the five or more layers of fiber-reinforced thermoplastic resin base materials constituting the laminate, an orientation direction of reinforcing fibers constituting a fiber-reinforced thermoplastic resin base material S1 constituting at least one outermost layer is different from an orientation direction of reinforcing fibers constituting a fiber-reinforced thermoplastic resin base material S2 located at a second layer from the outermost layer by 10° to 90°, a fiber-fiber contact percentage is 20% or more and 100% or less in a boundary layer $I_{12}$ between the fiber-reinforced thermoplastic resin base material S1 and the fiber-reinforced thermoplastic resin base material S2, and the fiber-fiber contact percentage is less than 20% between fiber-reinforced thermoplastic resin base materials other than the boundary layer $I_{12}$; or
   (ii) among the five or more layers of fiber-reinforced thermoplastic resin base materials constituting the laminate, the orientation direction of reinforcing fibers constituting a fiber-reinforced thermoplastic resin base material S1 constituting at least one outermost layer is different from the orientation direction of reinforcing fibers constituting a fiber-reinforced thermoplastic resin base material S2 located at a second layer from the outermost layer by 10° to 90°, the orientation direction of reinforcing fibers constituting the fiber-reinforced thermoplastic resin base material S2 located at the second layer from the outermost layer is different from an orientation direction of reinforcing fibers constituting a fiber-reinforced thermoplastic resin base material S3 located at a third layer from the outermost layer by 10° to 90°, the fiber-fiber contact percentage is 20% or more and 100% or less in the boundary layer $I_{12}$ between the fiber-reinforced thermoplastic resin base material S1 and the fiber-reinforced thermoplastic resin base material S2 and in a boundary layer $I_{23}$ between the fiber-reinforced thermoplastic resin base material S2 and the fiber-reinforced thermoplastic resin base material S3, and the fiber-fiber contact percentage is less than 20% between the fiber-reinforced thermoplastic resin base materials other than the interlayer $I_{12}$ and the interlayer $I_{23}$.

2. The laminate according to claim 1, wherein a thickness of the fiber-reinforced thermoplastic resin base material is 0.05 mm to 0.5 mm.

3. The laminate according to claim 1 or 2, wherein a fiber volume content of the fiber-reinforced thermoplastic resin base material is 40% or more and 70% or less.

4. The laminate according to any one of claims 1 to 3, comprising: a resin layer having a thickness of 1 to 50 $\mu$m on at least one surface of the laminate.

5. A welded article obtained by stacking and welding two or more of the laminate according to any one of claims 1 to 4 or stacking and welding the laminate according to any one of claims 1 to 4 and a material different from the laminate.

6. The welded article according to claim 5, wherein the welding is performed by induction heating.

EP 4 122 667 A1

Fig. 1

**EP 4 122 667 A1**

<table>
<tr><td colspan="2" style="text-align:left">INTERNATIONAL SEARCH REPORT</td><td colspan="2">International application No.<br>PCT/JP2021/007112</td></tr>
</table>

**A. CLASSIFICATION OF SUBJECT MATTER**
Int. Cl. B29B15/12(2006.01)i, B29K105/10(2006.01)n, B32B5/28(2006.01)i,
C08J5/04(2006.01)i, B29C70/10(2006.01)i
FI: B32B5/28 A, B29B15/12, C08J5/04, B29C70/10, B29K105:10
According to International Patent Classification (IPC) or to both national classification and IPC

**B. FIELDS SEARCHED**

Minimum documentation searched (classification system followed by classification symbols)
Int. Cl. B29B15/12, B29K105/10, B32B5/28, C08J5/04, B29C70/10

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-308626 A (TEIJIN TECHNO PRODUCTS LTD.) 25 December 2008, claims, example 1, fig. 1 | 1-6 |
| A | JP 58-59076 A (MITSUBISHI RAYON CO., LTD.) 07 April 1983, claims, example 4 | 1-6 |
| A | JP 02-286311 A (KANEKA CORP.) 26 November 1990, claims | 1-6 |
| A | JP 2013-522412 A (HEXCEL COMPOSITES LIMITED) 13 June 2013, abstract | 1-6 |
| A | JP 2008-231395 A (TORAY INDUSTRIES, INC.) 02 October 2008, abstract | 1-6 |

☒ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07.05.2021 | Date of mailing of the international search report<br>18.05.2021 |
|---|---|
| Name and mailing address of the ISA/<br>　Japan Patent Office<br>　3-4-3, Kasumigaseki, Chiyoda-ku,<br>　Tokyo 100-8915, Japan | Authorized officer<br><br><br>Telephone No. |

Form PCT/ISA/210 (second sheet) (January 2015)

21

| | **INTERNATIONAL SEARCH REPORT** | International application No. |
|---|---|---|
| | | PCT/JP2021/007112 |

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2013/140786 A1 (TORAY INDUSTRIES, INC.) 26 September 2013, abstract | 1-6 |
| A | WO 2018/235512 A1 (TORAY INDUSTRIES, INC.) 27 December 2018, abstract | 1-6 |
| A | WO 2018/051445 A1 (NISSAN MOTOR CO., LTD.) 22 March 2018, abstract | 1-6 |
| A | WO 2017/022835 A1 (MITSUBISHI RAYON CO., LTD.) 09 February 2017, abstract | 1-6 |

Form PCT/ISA/210 (continuation of second sheet) (January 2015)

**INTERNATIONAL SEARCH REPORT**
Information on patent family members

International application No.

PCT/JP2021/007112

| Patent Documents referred to in the Report | Publication Date | Patent Family | Publication Date |
|---|---|---|---|
| JP 2008-308626 A | 25.12.2008 | (Family: none) | |
| JP 58-59076 A | 07.04.1983 | (Family: none) | |
| JP 02-286311 A | 26.11.1990 | (Family: none) | |
| JP 2013-522412 A | 13.06.2013 | US 2013/0005205 A1 abstract GB 2478749 A WO 2011/114140 A1 EP 2547519 A1 AU 2011228823 A CA 2788610 A CN 102802944 A KR 10-2013-0016290 A RU 2012144030 A ES 2717612 T BR 112012023882 B | |
| JP 2008-231395 A | 02.10.2008 | US 2010/0178487 A1 abstract WO 2008/018421 A1 EP 2053078 A1 CA 2659431 A CN 101501114 A ES 2376128 T | |
| WO 2013/140786 A1 | 26.09.2013 | US 2015/0048555 A1 abstract EP 2829569 A1 CN 104245803 A KR 10-2014-0139493 A | |
| WO 2018/235512 A1 | 27.12.2018 | CN 110612196 A summary TW 201905052 A | |
| WO 2018/051445 A1 | 22.03.2018 | US 2019/0202142 A1 abstract EP 3513942 A1 CN 10971531 A | |
| WO 2017/022835 A1 | 09.02.2017 | US 2018/0222128 A1 abstract EP 3375588 A1 CN 109348708 A | |

Form PCT/ISA/210 (patent family annex) (January 2015)

**EP 4 122 667 A1**

REFERENCES CITED IN THE DESCRIPTION

**Patent documents cited in the description**

- WO 2012158293 A